(19) **Europäisches Patentamt**
**European Patent Office**
**Office européen des brevets**

(11) **EP 1 811 644 B1**

(12) **EUROPEAN PATENT SPECIFICATION**

(45) Date of publication and mention
of the grant of the patent:
**01.08.2012 Bulletin 2012/31**

(51) Int Cl.:
***H02M 7/155*** (2006.01)

(21) Application number: **05783233.9**

(86) International application number:
**PCT/JP2005/016942**

(22) Date of filing: **14.09.2005**

(87) International publication number:
**WO 2006/040899 (20.04.2006 Gazette 2006/16)**

(54) **CONVERTER CONTROL METHOD AND CONVERTER CONTROL DEVICE**

WANDLERSTEUERVERFAHREN UND WANDLERSTEUEREINRICHTUNG

PROCEDE DE COMMANDE DE CONVERTISSEUR ET DISPOSITIF DE COMMANDE DE
CONVERTISSEUR

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **14.10.2004 JP 2004300310**

(43) Date of publication of application:
**25.07.2007 Bulletin 2007/30**

(73) Proprietor: **DAIKIN INDUSTRIES, LTD.
Osaka-shi, Osaka 530-8323 (JP)**

(72) Inventors:
• **SAKAKIBARA, Kenichi
c/o Shiga Plant, DAIKIN INDUSTRIES, LTD.,
Kusatsu-shi, Shiga 5258526 (JP)**

• **MECHI, Abdal
c/o Shiga Plant, DAIKIN INDUSTRIES, LTD.,
Kusatsu-shi, Shiga 5258526 (JP)**

(74) Representative: **HOFFMANN EITLE
Patent- und Rechtsanwälte
Arabellastraße 4
81925 München (DE)**

(56) References cited:
| | |
|---|---|
| JP-A- 5 260 752 | JP-A- 5 260 752 |
| JP-A- 7 200 084 | JP-A- 8 223 920 |
| JP-A- 8 228 490 | JP-A- 10 105 261 |
| JP-A- 10 105 261 | JP-A- 10 155 293 |
| JP-A- 11 122 931 | JP-A- 2002 369 533 |
| JP-A- 2002 369 533 | US-A1- 2003 223 251 |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to techniques of controlling converters and, more particularly, to a technique of controlling a converter which operates based on a pulse width modulated switching signal.

Background Art

In JP 08228490, there is described a current command generation means that outputs a power current command of sine wave synchronized with the power voltage phase, with a current command Iq* for effective power as the amplitude of a current. A current control and PWM signal generation means outputs the PWM signal of a converter so that the detected power current may accord with the power current command Iq* generated with a DC voltage compensator. The mode is made a power generation mode, making the most of a PWM gate signal, in the region where the smoothing capacitor voltage detection value Vdc is larger than the upper limit value of the voltage of a smoothing capacitor, and the mode is made a diode rectification mode, breaking the PWM signal, in the region where the smoothing capacitor voltage detection value Vdc is smaller than the lower limit value of the voltage of the smoothing capacitor.

Further, according to JP 07200084, a phase angle detector decomposes the voltage signals for three phases of an AC system into the respective components of the real axis and the imaginary axis and detects the phase of the positive phase sequence from the respective components by using the instantaneous symmetric coordinate method. Then, the phase of the positive phase sequence from the phase angle detector is defined as the voltage phase. Thus, even when one line inside the AC system commits a ground fault and the voltage becomes zero, the phase is highly accurately detected and the operation is stably continued without stopping a power converter controlling the power converter based on the detected phase.

There is what is termed a PWM converter that rectifies an AC voltage obtained from a multiphase AC power supply and outputs the rectified voltage. The PWM converter operates based on a pulse width modulated switching signal. Typically, a reactor is interposed between the PWM converter and the multiphase AC power supply, and the rectified voltage is applied to a smoothing capacitor. Such technique is introduced in a patent document 1, for example. A DC load is also typically connected to the smoothing capacitor. The DC load may include a pair of an inverter and an AC load.

When a peak value of a power supply voltage is higher than the rectified voltage (hereafter called an "end-to-end voltage") supported by the smoothing capacitor in the PWM converter, a freewheeling diode included in the PWM converter is rendered conductive, creating distortion in current input to the PWM converter.

To avoid such situation, a method is proposed that detects a peak value of a power supply voltage, and controls an end-to-end voltage to follow the peak value. Such technique is introduced in a patent document 2, for example.

Patent document 1: Japanese Patent Application Laid-Open No. 1-298959
Patent document 2: Japanese Patent Application Laid-Open No. 11-235068

Unfortunately, a separate mechanism is needed in order to detect the peak value of the power supply voltage. The mechanism includes means for detecting an AC voltage, means for detecting a peak value of the detected AC voltage, and the like.

It is alternatively conceivable to preset an end-to-end voltage to match an assumed maximum value for a power supply voltage correspondingly to the variation range of power supply. In a converter that corresponds to a plurality of rated values, however, an end-to-end voltage higher than necessary is generated when the converter operates with a low rated value. This increases losses in switching elements of the converter, resulting in lowered efficiency.

Disclosure of Invention

To solve the aforementioned problems, the present invention has an object to provide a technique of controlling a converter which does not need a separate mechanism for detecting a peak value of a power supply voltage, and is easily applicable to a converter corresponding to a plurality of rated values.

A method according to the invention is defined in claim 1.

According to the method of controlling a converter of the invention, the component ($I_q$) of the current (I) passing through the multiphase AC power supply (1), the component being in phase to the AC power supply voltage ($V_s$), and the end-to-end voltage ($V_{dc}$) of the smoothing capacitor are not explicitly controlled by adopting command values for them. Instead, the second phase voltage command value ($V_q$*) is determined based on the end-to-end voltage. Distortion is thus not created in current passing through the multiphase AC power supply when variations in the AC power supply voltage involve variations in the end-to-end voltage. This technique may thus be easily applied to a converter corresponding to a plurality of rated values. Further, a separate mechanism for detecting the peak value of the power supply voltage is not needed.

In a first aspect of the method of controlling a converter according to the invention, the first phase current command value ($I_d$*) is set to zero.

In a second aspect of the method of controlling a converter according to the invention, in the first aspect of the method of controlling a converter according to the invention, the second phase voltage command value ($V_q$*) is obtained by multiplying the end-to-end voltage by a first constant $(\mathbf{k_{inv}}/\sqrt{2}),$ and an upper limit value of the first constant is limited by a maximum rating of the current (I) passing through the multiphase AC power supply.

In a third aspect of the method of controlling a converter according to the invention, in the second aspect of the method of controlling a converter according to the invention, the first phase voltage command value ($V_q$*) is corrected by subtracting the product ($\omega L I_d$) of the first phase current ($I_d$) and an impedance ($\omega L$) of a reactor (2) from a command value (Vs*) for the AC power supply voltage ($V_s$).

In a fourth aspect of the method of controlling a converter according to the invention, the second voltage command value ($V_q$*) is corrected by further subtracting a value ($\Delta V_q$*) which is obtained by multiplying the second phase current by a positive second constant ($R_{dump}$).

In a fifth aspect of the method of controlling a converter according to the invention, in the third aspect of the method of controlling a converter according to the invention, the second phase voltage command value ($Vq$*) is corrected by subtracting a value ($\Delta V_q$*) which is obtained by multiplying differentiated end-to-end voltage ($V_{dc}$) by a third constant (T).

In a sixth aspect of the method of controlling a converter according to the invention, in the fifth aspect of the method of controlling a converter according to the invention, the third constant is set to the inverse of a resonance frequency ($\omega_n$) of an open loop transfer function of a control system regarding the first phase current when the third constant is zero.

A device (6) according to the invention, is defined in claim 8.

According to the invention, the component ($I_q$) of the current (I) passing through the multiphase AC power supply (1), the component being in phase to the AC power supply voltage ($V_s$), and the end-to-end voltage ($V_{dc}$) of the smoothing capacitor are not explicitly controlled by adopting command values for them. Instead, the second phase voltage command value ($V_q$*) is determined based on the end-to-end voltage. Distortion is thus not created in current passing through the multiphase AC power supply when variations in the AC power supply voltage involve variations in the end-to-end voltage. Thus it is easily applicable to a converter corresponding to a plurality of rated values. Further, a separate mechanism for detecting the peak value of the power supply voltage is not needed.

In a first aspect of the device (6) of controlling a converter according to the invention, the first phase current command value (Id*) is set to zero.

In a second aspect of the device (6) of controlling a converter according to the invention, the first aspect of the device of controlling a converter according to the invention further includes a first multiplier (607) for multiplying the end-to-end voltage ($V_{dc}$) by a first constant $(\mathbf{k_{inv}}/\sqrt{2}),$ and outputting a second phase voltage command value ($V_q$*) as a command value for a component of the AC input voltage ($V_i$), the component being in phase to the AC power supply voltage. The pulse width modulator (605) controls the pulse width modulation converter based on the first phase voltage command value ($V_d$*) and the second phase voltage command valu ($V_q$*). An upper limit value of the first constant is limited by a maximum rating of the current (I) passing through the multiphase AC power supply.

In a third aspect of the device (6) of controlling a converter according to the invention, the second aspect of the device of controlling a converter according to the invention further includes a second multiplier (608) for obtaining the product ($\omega L I_d$) of the first phase current ($I_d$) and impedance ($\omega L$) of the reactor (2); and a first subtracter (610) for subtracting an output from the second multiplier from an output from the first multiplier, to correct the output from the first multiplier (607).

In a fourth aspect of the device (6) of controlling a converter according to the invention, in the third aspect of the device of controlling a converter according to the invention, a component of the current (I) passing through the multiphase AC power supply is obtained as a second phase current ($I_q$) at the coordinate converter (603), the component being in phase to the AC power supply voltage ($V_s$). The device further includes a third multiplier (612) for obtaining the product ($\Delta V_q$*) of the second phase current and a positive second constant ($R_{dump}$), wherein the first subtracter (610) further subtracts the output from the third multiplier (612) from an output from the first multiplier, to correct the output from the first multiplier (607).

In a fifth aspect of the device (6) of controlling a converter according to the invention, the third aspect of the device of controlling a converter according to the invention further includes a differentiator (613) for obtaining a value

($\Delta V_q^*$) by multiplying differentiated end-to-end voltage ($V_{dc}$) by a third constant (T) wherein the first subtracter (610) further subtracts the output from the differentiator (613) from an output from the first multiplier (607) to correct the output (Ts) from the first multiplier (607).

In a seventh aspect of the device (6) of controlling a converter according to the invention, in the sixth aspect of the device of controlling a converter according to the invention, the third constant is set to the inverse of a resonance frequency ($\omega_n$) of an open loop transfer function of a control system regarding the second phase current ($I_q$) when the third constant is zero.

These and other objects, features, aspects and advantages of the present invention will become more apparent from the following detailed description of the present invention when taken in conjunction with the accompanying drawings.

Brief Description of Drawings

Fig. 1 is a block diagram illustrating the structure of a converter control device according to a first preferred embodiment of the present invention.

Fig. 2 is a vector diagram indicating the relationship between an AC power supply voltage and an input voltage.

Fig. 3 is a circuit diagram illustrating the structure of a pulse width modulation converter.

Fig. 4 is a block diagram illustrating an equivalent circuit of an AC power supply and a reactor.

Fig. 5 is a block diagram partially illustrating the structure of a converter control device according to a second preferred embodiment of the present invention.

Fig. 6 is a block diagram illustrating a closed loop for a q-axis current according to the second preferred embodiment of the present invention.

Fig. 7 is a block diagram illustrating the structure of the converter control device according to the second preferred embodiment of the present invention.

Fig. 8 is a block diagram illustrating the closed loop for the q-axis current according to the second preferred embodiment of the present invention.

Fig. 9 illustrates an equivalent block in the converter control device according to the second preferred embodiment of the present invention.

Fig. 10 is a Bode diagram demonstrating the effect of the second preferred embodiment of the present invention.

Fig. 11 is a graph illustrating the operation according to the first preferred embodiment of the present invention.

Fig. 12 is a graph illustrating the operation according to the second preferred embodiment of the present invention.

Fig. 13 is a block diagram illustrating the structure of a converter control device according to a third preferred embodiment of the present invention.

Fig. 14 is a block diagram illustrating a closed loop for a q-axis current according to the third preferred embodiment of the present invention.

Fig. 15 is a Bode diagram demonstrating the effect of the second preferred embodiment of the present invention.

Fig. 16 is a Bode diagram demonstrating the effect of the second preferred embodiment of the present invention.

Fig. 17 is a graph illustrating the operation according to the third preferred embodiment of the present invention.

Best Modes for Carrying Out the Invention

First Preferred Embodiment

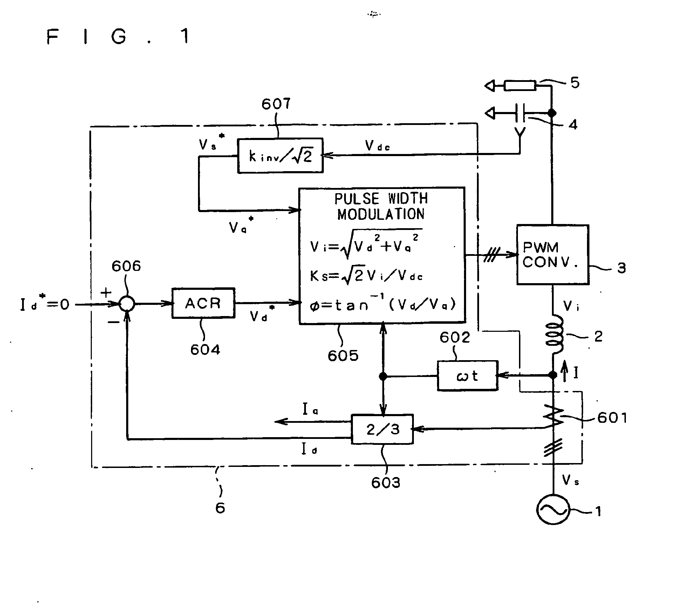

Fig. 1 is a block diagram illustrating the structure of a converter control device according to a first preferred embodiment of the present invention. A pulse width modulation converter 3 is connected to a multiphase AC power supply 1 via a reactor 2 on its input side, and is connected to a smoothing capacitor 4 on its output side. The multiphase AC power supply 1 is a three-phase AC power supply and the reactor 2 consists of three reactors, for example.

A load 5 is connected to the smoothing capacitor 4 in parallel. An inverter and a motor controlled by the inverter are employed for the load 5, for example.

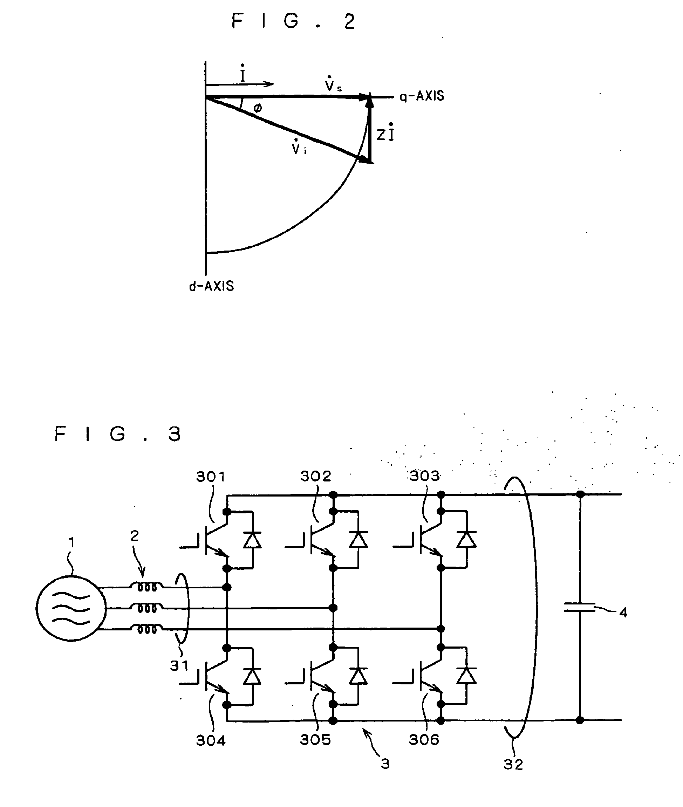

By the passage of a current I through the reactor 2, an input voltage $V_i$ to the pulse width modulation converter 3 is determined with respect to an AC power supply voltage $V_s$ output from the multiphase AC power supply 1. Fig. 2 is a vector diagram indicating the relationship between those voltages, where the pulse width modulation converter 3 is controlled such that a power factor becomes 1. Here, the q-axis and d-axis of orthogonal coordinates represent the same phase as that of the AC power supply voltage $V_s$ and a phase orthogonal thereto, respectively. The reactor 2 generates a voltage having a phase leading by 90 degrees with respect to the phase of the current passing therethrough, with impedance "Z". Thus, a voltage ZI becomes parallel to the d-axis. A phase difference $\phi$ exists between the AC power supply voltage $V_s$ and the input voltage $V_i$.

Fig. 3 is a circuit diagram illustrating the structure of the pulse width modulation converter 3. The pulse width modulation converter 3 in this case, for example, has a structure corresponding to the multiphase AC power supply 1 having three phases. Such structure is well known and thus the detail is not described. Put simply, semiconductor elements 301 to 306 each have a parallel connection of an insulated gate bipolar transistor serving as a switching element, and a freewheeling diode. A pair of these semiconductor elements is connected in series for each phase, the nodes at the respective connections being connected to the three elements of the reactor 2. The nodes are understood as an input-side end group 31 of the pulse width modulation converter 3.

The semiconductor elements 301 to 306 connected in series for each phase have their ends being connected to both ends of the smoothing capacitor 4. The ends of the pulse width modulation converter 3 connected to the smoothing capacitor are understood as an output-side end group 32.

The operation of the pulse width modulation converter 3 is controlled by a converter control device 6. The converter control device 6 includes a current detector 601, a phase detector 602, a coordinate converter 603, a current controller 604, a pulse width modulator 605, an adder-subtracter 606, and a multiplier 607. Although not specifically illustrated, the converter control device 6 may include means for measuring an end-to-end voltage $V_{dc}$.

The current detector 601 detects the current I passing from the multiphase AC power supply 1 to the pulse width modulation converter 3. The phase detector 602 detects a phase of the AC power supply voltage $V_s$ output from the multiphase AC power supply 1. The coordinate converter 603 converts the current I to the q-axis and d-axis to have three/two phases, to obtain a q-axis current $I_q$ and a d-axis current $I_d$, respectively. The multiplier 607 multiplies the end-to-end voltage $V_{dc}$ by a positive constant $k_{inv}/\sqrt{2}$, to output a voltage $V_s^*$.

The adder-subtracter 606 outputs deviation between the d-axis current $I_d$ and a d-axis current command value $I_d^*$ as a command value therefor. The current controller 604 obtains a d-axis voltage command value $V_d^*$ based on the deviation. The d-axis voltage command value $V_d^*$ is a command value for a d-axis component of the input voltage $V_i$ to the pulse width modulation converter 3.

The pulse width modulator 605 performs pulse width modulation based on the d-axis voltage command value $V_d^*$ and a q-axis voltage command value $V_q^*$ described later, to generate a pulse signal. The pulse signal controls switching of the pulse width modulation converter 3, more specifically, of the switching elements of the semiconductor elements 301 to 306.

As a result of the switching, the pulse width modulator 605 functions such that the d-axis component $V_d$ and q-axis component $V_q$ of the input voltage $V_i$ to the pulse width modulation converter 3 satisfy an equation (1) indicated below. Pulse width modulation techniques based on the d-axis voltage command value $V_d^*$ and q-axis voltage command value $V_q^*$ are well known and thus are not described. A ratio $k_s$ is also termed a voltage control rate.

[Numeral 1]

$$V_i = \sqrt{V_d{}^2 + V_q{}^2}$$
$$K_s = \sqrt{2} V_i / V_{dc} \qquad \cdots (1)$$
$$\phi = \tan^{-1}(V_d / V_q)$$

In this embodiment, the voltage $V_s^*$ output from the multiplier 607 is employed as the q-axis voltage command value $V_q^*$. While the q-axis and the AC power supply voltage $V_s$ are adopted in the same phase, the impedance Z of the reactor 2 advances the phase of a voltage by 90 degrees with respect to a current, as depicted in Fig. 2. Thus, a q-axis voltage $V_q$ ideally becomes equal to the AC power supply voltage $V_s$ with the d-axis current $I_d$ being zero, and the voltage $V_s^*$ may be understood as a command value for the AC power supply voltage $V_s$.

Reactive power becomes zero by setting the d-axis current $I_d$ to zero, thereby improving the power factor. More specifically, the d-axis current command value $I_d^*$ supplied to the adder-subtracter 606 is set to zero.

Load power is expressed by the product of the end-to-end voltage $V_{dc}$ and a current passing through a load, and is also expressed by the product of the q-axis current $I_q$ and the AC power supply voltage $V_s$ by setting the d-axis current $I_d$ to zero. Using this relationship, it has been possible to control the end-to-end voltage $V_{dc}$ to a prescribed value by control based on the q-axis current Iq. It has not been possible, however, to set a command value for the end-to-end voltage to a peak value of $\sqrt{2}V_i$ of the power supply voltage or less, due to the fact that the pulse width modulation converter 3 is only capable of raising a voltage.

In contrast to this, the value of $k_{inv}/\sqrt{2}$ may be set to 1 or less in the present invention. This allows the end-to-end voltage $V_{dc}$ to be set higher than the peak value of the power supply voltage.

As depicted in Fig. 2, the input voltage $V_i$ differs from the AC power supply voltage $V_s$ by the voltage drop ZI in the reactor 2. To maintain the relationship depicted in the vector diagram of Fig. 2 even when an increase in current flow increases the voltage drop ZI and phase difference $\phi$, the constant $k_{inv}$ is increased to some degree to maintain the value of $V_q{}^*$. Consequently, a difference between the AC power supply voltage $V_s$ and the input voltage $V_i$ may be attributed to a voltage generated at a power supply reactor.

As has been described, the q-axis current $I_q$ and the end-to-end voltage $V_{dc}$ are not explicitly controlled by adopting command values for them in this embodiment. This requires a small amount of computation for control, and reduces computation load on a CPU as well.

Instead, the q-axis voltage command value $V_q{}^*$ is determined in proportion to the end-to-end voltage $V_{dc}$. Distortion is thus not created in current passing through the multiphase AC power supply 1 when variations in the AC power supply voltage $V_s$ involve variations in the end-to-end voltage $V_{dc}$. This technique may thus be easily applied to a converter corresponding to a plurality of rated values. Further, only a simple structure is required because a separate mechanism for detecting the peak value of the power supply voltage is not needed.

Second Preferred Embodiment

In this embodiment, a non-interference term is added to the converter control device 6, and transient characteristics are improved. Initially, improvements to the structure illustrated in the first preferred embodiment are described with the addition of a non-interference term.

Turning to the direction of the current I in Fig. 1, an equation (2) is obtained regarding the AC power supply 1 and the reactor 2, similarly to a fundamental characteristic equation of a motor. The symbols "r" and "L" represent a resistance part and an inductance part of the impedance Z of the reactor 2, respectively. The symbol "s" represents a time differential operator.

[Numeral 2]

$$\begin{bmatrix} V_d \\ V_q - V_s \end{bmatrix} = - \begin{bmatrix} r + Ls & -\omega L \\ \omega L & r + Ls \end{bmatrix} \begin{bmatrix} I_d \\ I_q \end{bmatrix} \quad \cdots (2)$$

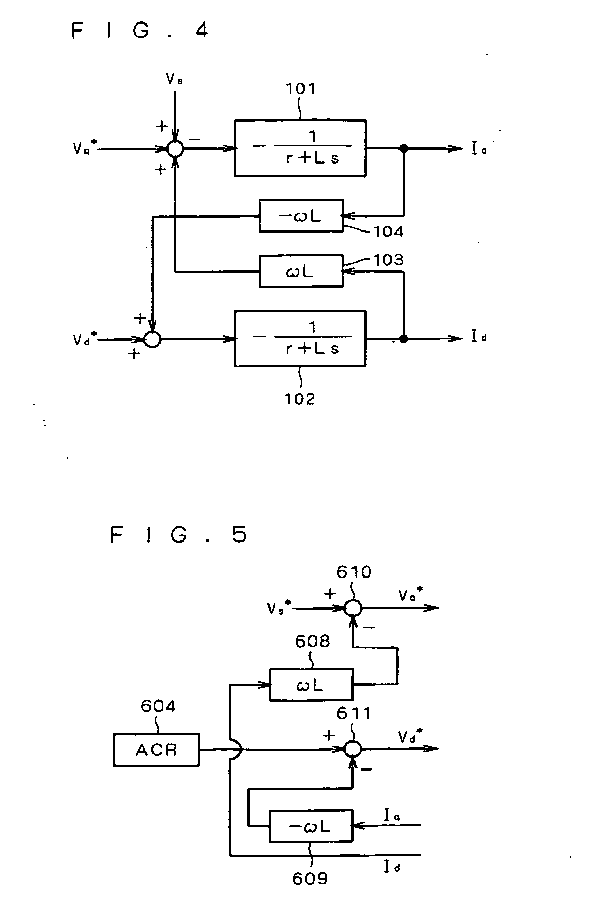

Fig. 4 is a block diagram illustrating an equivalent circuit of the AC power supply 1 and the reactor 2 based on the equation (2). A difference between the q-axis voltage command value $V_q{}^*$ and the AC power supply voltage $V_s$ is converted to the q-axis current $I_q$ using a first-order lag transfer function by a block 101. Likewise, the d-axis voltage command value $V_d{}^*$ is converted to the d-axis current $I_d$ using a first-order lag transfer function by a block 102.

Further, with the existence of a reactance part $\omega L$ in the reactor 2, the d-axis current $I_d$ and the q-axis current $I_q$ substantially vary, in converted amounts by blocks 103 and 104, respectively, the q-axis voltage $V_q$ and the d-axis voltage $V_d$. The varied amounts $\omega L I_d$ and $(-w L I_q)$ are hereafter called a q-axis interference term and a d-axis interference term, respectively.

By subtracting these interference terms in advance from the q-axis voltage $V_q$ and the d-axis voltage $V_d$ generated by the converter control device 6 for compensation, respectively, the q-axis and the d-axis may be treated as independent control systems in the Fig. 1 structure.

Fig. 5 partially illustrates the Fig. 1 structure including blocks 608 and 609 for generating the q-axis interference term $w L I_d$ and the d-axis interference term $(-\omega L I_q)$, respectively, and subtracters 610 and 611 for making compensation with the interference terms.

The subtracter 610 subtracts the q-axis interference term $\omega L I_d$ from the voltage $V_s{}^*$, to generate the q-axis voltage command value $V_q{}^*$. The q-axis voltage command value $V_q{}^*$ thus generated is not the voltage $V_s{}^*$ itself as employed in the first preferred embodiment, but a compensated q-axis voltage command value $V_q{}^*$ obtained by subtracting the interference term for correction.

Likewise, the subtracter 611 subtracts the d-axis interference term $(-\omega L I_q)$ from the output of the current controller 604, to generate the d-axis voltage command value $V_d{}^*$. The d-axis voltage command value $V_d{}^*$ thus generated is not the output itself from the current controller 604 as employed in the first preferred embodiment, but a compensated d-axis voltage command value $V_d{}^*$ obtained by subtracting the interference term for correction.

As described above, the q-axis voltage $V_q$ ideally becomes equal to the AC power supply voltage $V_s$ with the d-axis current $I_d$ being zero, and the voltage $V_s{}^*$ may be understood as a command value for the AC power supply voltage $V_s$. The AC power supply voltage $V_s$ (Fig. 4) in the AC power supply 1 and the reactor 2 and the voltage $V_s{}^*$

(Fig. 5) in the converter control device 6 thus cancel each other. Also, the q-axis interference terms $\omega\, LI_d$ generated by the blocks 103 and 608 cancel each other, and the d-axis interference terms $(-\omega\, LI_q)$ generated by the blocks 104 and 609 cancel each other. As a result, a closed loop independent of the d-axis is obtained for the q-axis current Iq.

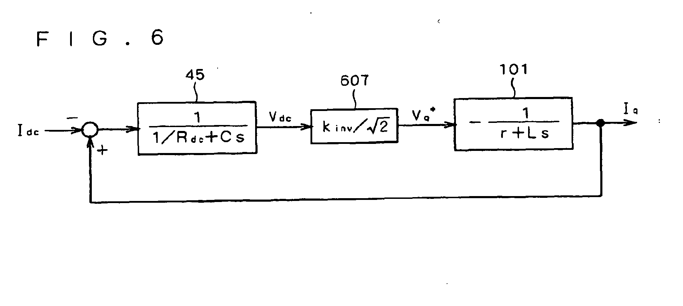

Fig. 6 is a block diagram illustrating the closed loop for the q-axis current Iq. The transfer function of a block 45 represents conductance of the parallel connection of the smoothing capacitor 4 and the load 5. The symbol "C" represents capacitance of the smoothing capacitor 4, the symbol "$R_{dc}$" represents a resistance part of the load 5, and a reactance part of the load 5 is included in contribution to reactance of the capacitance C.

A load current variation portion $I_{dc}$ is subtracted from the q-axis current $I_q$, which is input to the block 45. The load current variation part $I_{dc}$ indicates a current further subtracted from the smoothing capacitor 4 when the load 5 is regarded as steady load. The output from the block 45 is thus the end-to-end voltage $V_{dc}$.

As depicted in Fig. 1, the multiplier 607 multiplies the end-to-end voltage $V_{dc}$ by a positive constant $k_{inv}/\sqrt{2}$, to output the q-axis voltage command value $V_q{}^*$. Then as depicted in Fig. 4, the q-axis current $I_q$ is obtained from the block 101.

In such ways, the effect of the voltage of the q-axis component generated by the d-axis current in the reactor 2 can be removed from the q-axis voltage command value $V_q{}^*$. This allows the q-axis current $I_q$ to be controlled independently of the d-axis component.

Like the block 101, however, the block 45 includes a first-order lag element. Thus when a transient phenomenon occurs, namely, when the load current variation part $I_{dc}$ is nonnegligible, the q-axis current $I_q$ will be disturbed significantly at a resonance point.

An equation (3) represents an overall transfer function of the closed loop system shown in Fig. 6. For brevity, $k_{inv}/\sqrt{2}$ is set to 1. As the resistance part r of the reactor 2 is generally considered negligible with respect to the resistance part $R_{dc}$ of the load 5, a resonance frequency $\omega_c$ is approximated as an equation (4).

[Numeral 3]

$$G(s) = \frac{I_q(s)}{I_{dc}(s)}$$

$$= \frac{1}{LCs^2 + (rC + L/R_{dc})s + r/R_{dc} + 1}$$

$$= \frac{1/LC}{s^2 + (r/L + 1/R_{dc}C)s + (r/R_{dc} + 1)/LC} \qquad \cdots(3)$$

[Numeral 4]

$$\omega_c = \sqrt{\frac{1}{LC}(r/R_{dc} + 1)} \cong \sqrt{\frac{1}{LC}} \qquad \cdots(4)$$

To prevent such disturbance in the q-axis current $I_q$ in the transient phenomenon, the resistance part r of the reactor 2 is apparently increased to function as so-called dumping resistance in this embodiment.

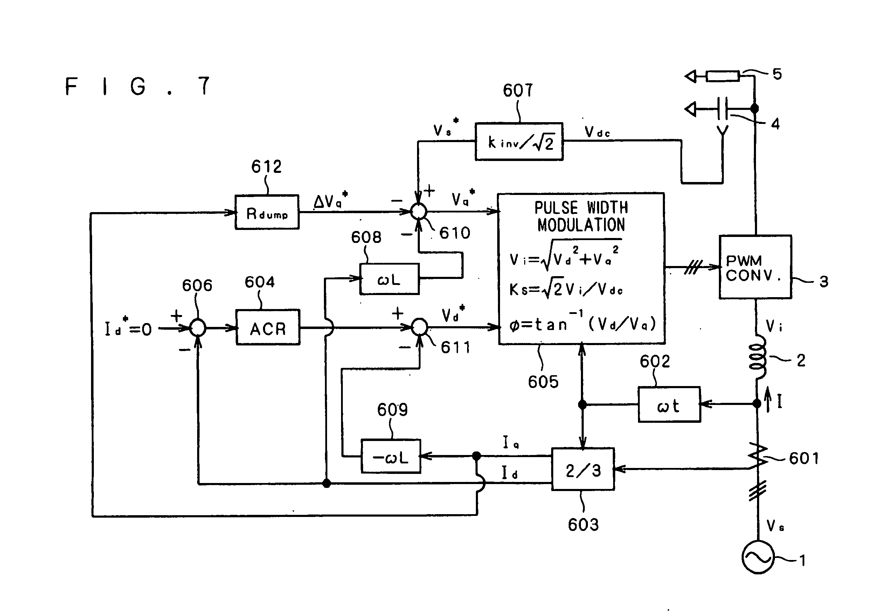

Fig. 7 is a block diagram illustrating the structure of a converter control device according to a second preferred embodiment of the present invention. The blocks 608 and 609, and the subtracters 610 and 611 shown in Fig. 5, and further a block 612, are added to the converter control device according to the first preferred embodiment.

The subtracter 610 is transformed from the function shown in Fig. 5, and subtracts the q-axis interference term $\omega\, LI_d$ and further subtracts an amount of correction $\Delta V_q{}^*$ from the voltage $V_s{}^*$, to obtain the q-axis voltage command value $V_q{}^*$. The amount of correction $\Delta V_q{}^*$ is generated by the block 612 which multiplies the q-axis current $I_q$ by a positive constant $R_{dump}$ in this embodiment.

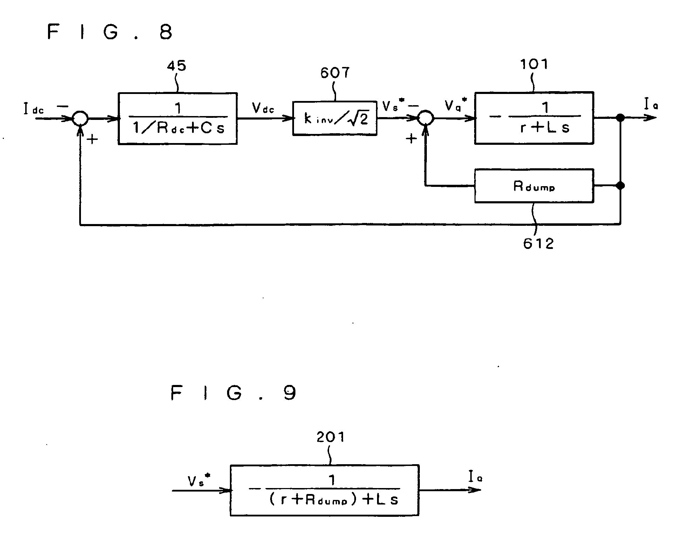

Fig. 8 is a block diagram illustrating, like Fig. 6, the closed loop for the q-axis current $I_q$ according to this embodiment. The subtracter 610 and the blocks 101 and 612 form the closed loop, which is equivalently illustrated as a block 201 in Fig. 9. Namely, when understood as a similar structure to that shown in Fig. 6, the resistance part of the reactor 2 apparently increases by the constant $R_{dump}$.

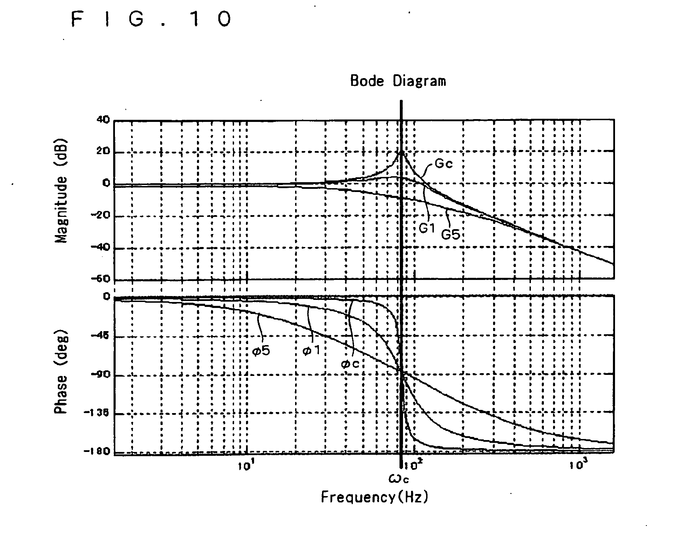

Fig. 10 is a Bode diagram demonstrating the effect of this embodiment. Gain $G_c$ and a phase $\phi_c$ are obtained with $R_{dum}p = 0$, gain $G_1$ and a phase $\phi_1$ are obtained with $R_{dump} = r$, and gain $G_5$ and a phase $\phi_5$ are obtained with $R_{dump} = 5r$. The diagram shows that an increase in gain and a sudden change in phase in the vicinity of the resonance frequency $\omega_c$ approximated by the equation (4) can be suppressed by the effect of the dumping resistance.

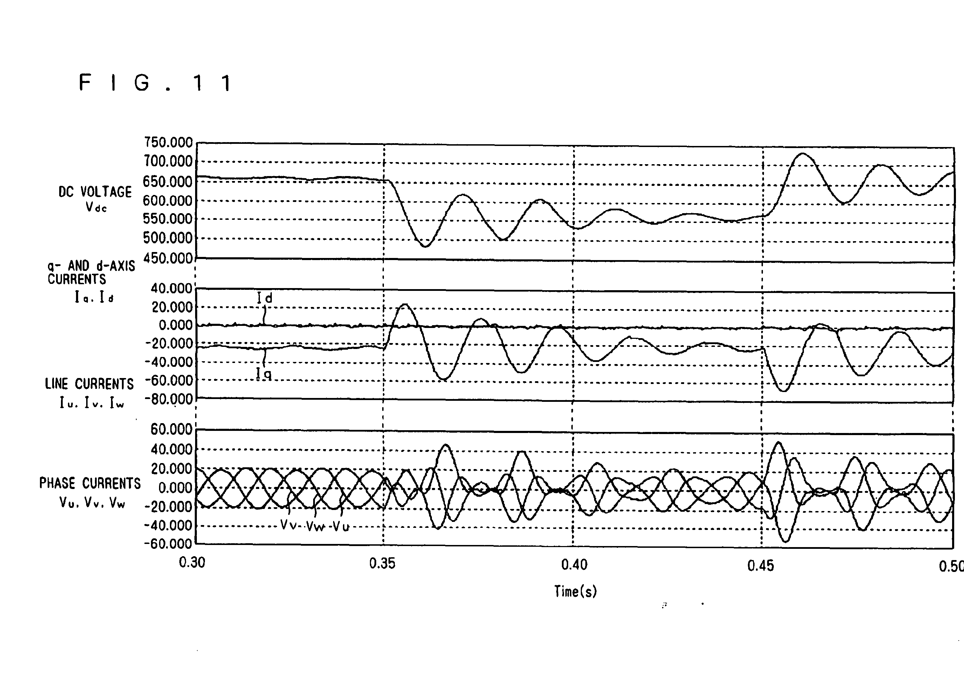

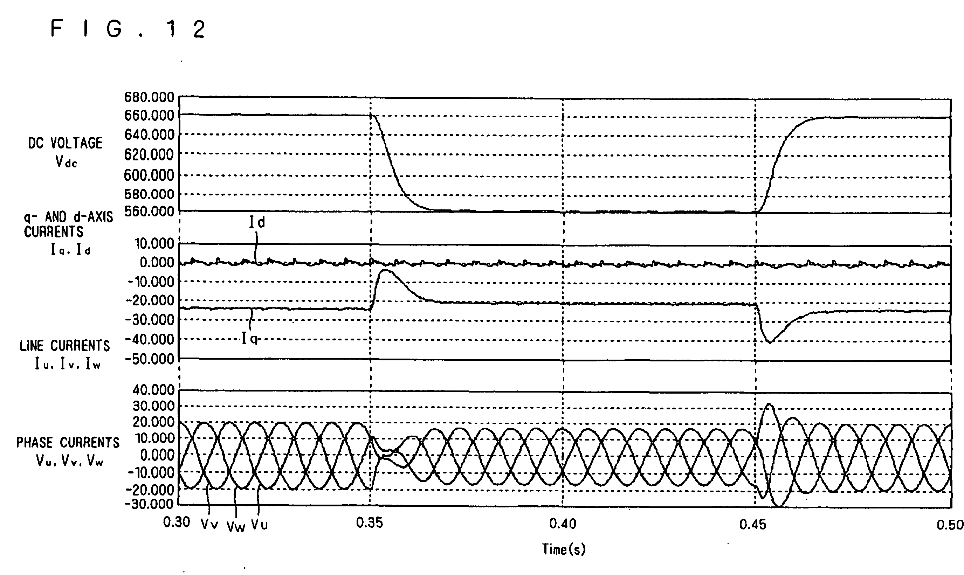

Figs. 11 and 12 are graphs illustrating the operations ($R_{dump} = 5r$) according to the first and second preferred embodiments. The graphs show variations in voltages and currents with a reduction and recovery in power supply voltage. It is demonstrated that the end-to-end voltage $V_{dc}$ and the q-axis current $I_q$, which oscillate significantly in the operation according to the first preferred embodiment, vary without oscillation in the operation according to the second preferred embodiment.

Such effect can also be generally explained by the fact that oscillation may be avoided by setting an attenuation constant $\xi$ to 1 or more in a transfer function F(s) indicated as an equation (5).

[Numeral 5]

$$F(s) = \frac{\omega^2}{s^2 + 2\xi\omega s + \omega^2} \qquad \cdots(5)$$

Third Preferred Embodiment

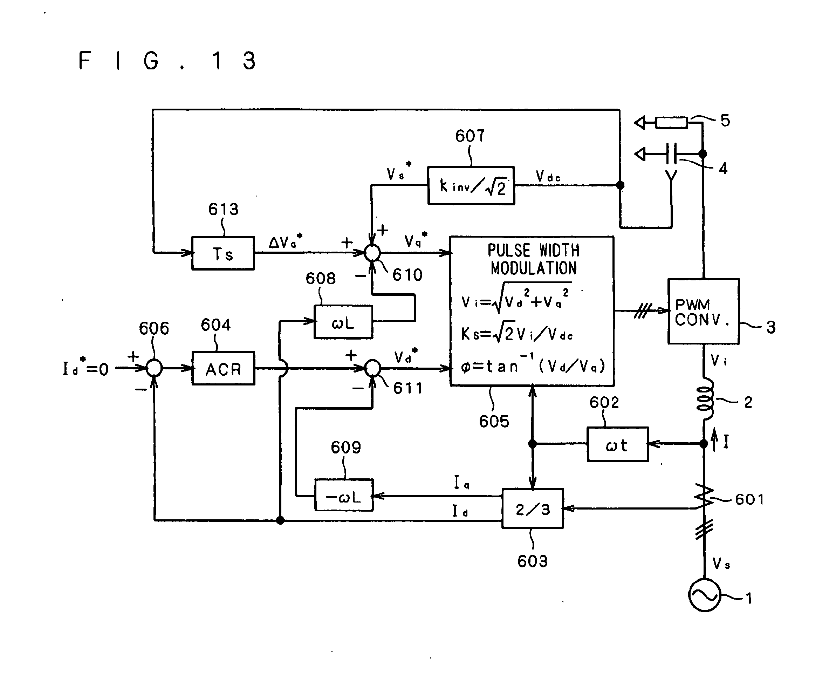

Fig. 13 is a block diagram illustrating the structure of a converter control device according to a third preferred embodiment of the present invention. The blocks 608 and 609, and the subtracters 610 and 611 shown in Fig. 5, and further a block 613, are added to the converter control device according to the first preferred embodiment.

The block 613 is a first-order lead element Ts, and time-differentiates the end-to-end voltage $V_{dc}$ input thereto, further multiplies $V_{dc}$ by a constant T, to output the amount of correction $\Delta V_q{}^*$. The subtracter 610 is transformed from the function shown in Fig. 5, and subtracts the q-axis interference term $\omega L I_d$ and further subtracts the amount of correction $\Delta V_q{}^*$ from the voltage $V_s{}^*$, to obtain the q-axis voltage command value $V_q{}^*$.

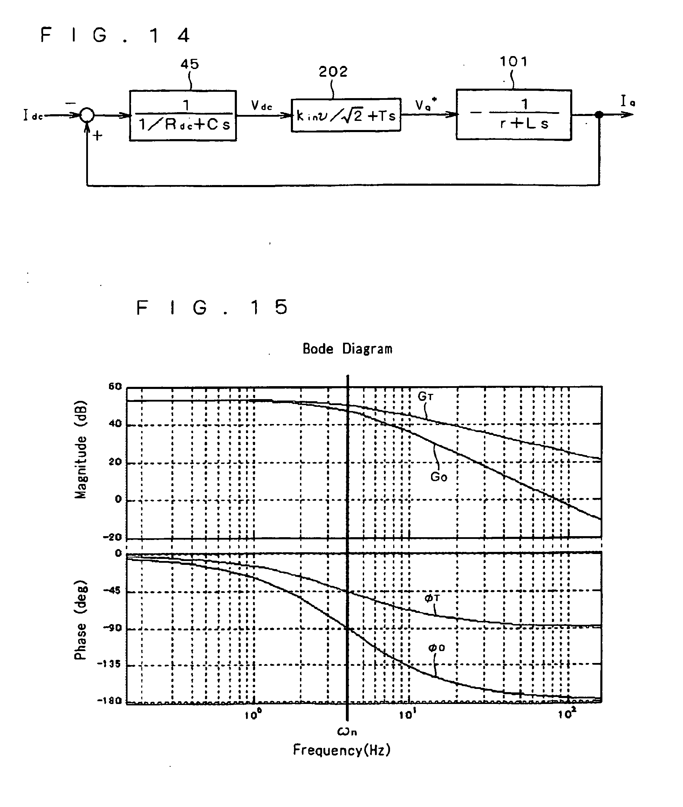

As a result, the block diagram shown in Fig. 6 is changed to one shown in Fig. 14. In the block diagram of the closed loop for the q-axis current $I_q$ according to this embodiment, a block 202 replaces the block 607 shown in Fig. 6. The block 202 converts the end-to-end voltage $V_{dc}$ using a first-order lead transfer function $k_{inv}/\sqrt{2}+Ts$), to obtain the q-axis voltage command value $V_q{}^*$. This renders the closed loop for the q-axis current $I_q$ a first-order lag transfer function. Therefore, the oscillation in the current I can be suppressed.

Fig. 15 is a Bode diagram demonstrating the effect of this embodiment, regarding an open loop of the block diagram shown in Fig. 14. Gain $G_0$ and a phase $\phi_0$ are obtained with T = 0, and gain $G_T$ and a phase $\phi_T$ are obtained with $T = 1/\omega_n$. The symbol $\omega_n$ indicates a resonance frequency of an open loop transfer function with T = 0, and is expressed as an equation (6). By advancing the phase in the vicinity of the resonance frequency in the open loop in this manner, the oscillation at the occurrence of resonance at the closed loop can be effectively suppressed.

[Equation 6]

$$\omega_n = \sqrt{\frac{r}{RLC}} \qquad \cdots(6)$$

In Fig. 15, the absolute value of inclination of a high-frequency-side asymptote of the gain decreases from 40 dB/decade to 20 dB/decade, and the absolute value of phase delay in $\omega_n$ decreases from 90 degrees to 45 degrees, resulting in improvement to a first-order lag transfer function.

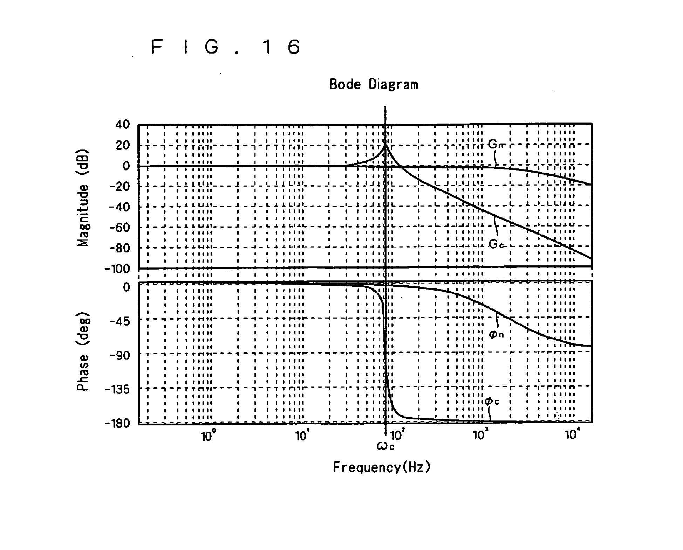

Fig. 16 is a Bode diagram demonstrating the effect of this embodiment, regarding the block diagram shown in Fig. 14 (closed loop). Gain $G_c$ and a phase $\phi_c$ are obtained with T = 0, and gain $G_n$ and a phase $\phi_n$ are obtained with $T = 1/\omega_n$. It is shown that an increase in gain and a sudden change in phase in the vicinity of the resonance frequency $\omega_n$

of the closed loop transfer function corresponding to the first preferred embodiment is relieved in the third preferred embodiment (due to an increase in resonance frequency of the closed loop transfer function).

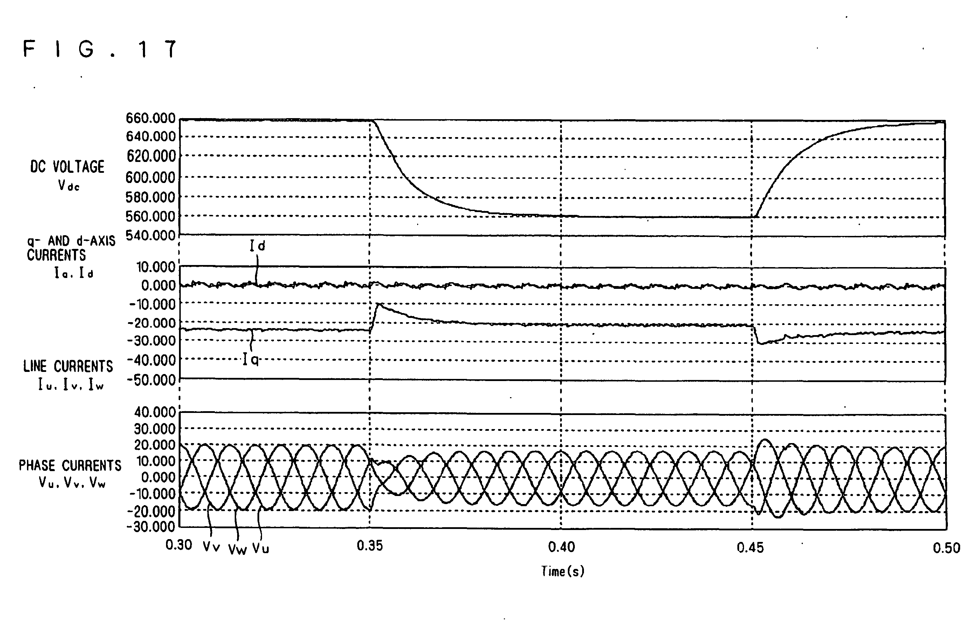

Fig. 17 is a graph illustrating the operation ($T = 1/\omega_n$) according to the third preferred embodiment. The graph shows variations in voltages and currents with a reduction and recovery in power supply voltage. It is demonstrated that the end-to-end voltage $V_{dc}$ and the q-axis current $I_q$ vary without oscillation, as in the second preferred embodiment.

In such ways, a quick response to load variations is possible with a simple structure in the second and third preferred embodiments without having to perform control based on a q-axis current command value.

## Claims

1. A method of controlling a pulse width modulation converter (3) having a first end group (31) connected to a multiphase AC power supply (1) via a reactor (2) and a second end group (32) connected to a smoothing capacitor (4), said method comprising the steps of:

   detecting an end-to-end voltage ($V_{dc}$) of said smoothing capacitor (4);
   obtaining (603) a component of a current ($I_d$) passing through said multiphase AC power supply (1) as a first phase current ($I_d$), said component being an orthogonal phase to an AC power supply voltage ($V_s$) output from said multiphase AC power supply (1);
   obtaining a first phase voltage command value ($V_d{}^*$) as a command value for a component ($V_d$) of an AC input voltage ($V_i$) based on said first phase current ($I_d$) and a first phase current command value ($I_d{}^*$) as a command value for said first phase current ($I_d$), said component ($V_d$) being an orthogonal phase to said AC power supply voltage; and
   controlling said pulse width modulation converter (3) based on said first phase voltage command value ($V_d{}^*$) and a second phase voltage command value ($V_q{}^*$);
   ***characterized by***
   obtaining said second phase voltage command value ($V_q{}^*$) as a command value for a component ($V_q$) of said AC input voltage ($V_i$) input to said pulse width modulation converter (3) by multiplying said end-to-end voltage ($V_{dc}$) by a first constant (607) without using a command value for the end-to-end voltage ($V_{dc}$), said component ($V_q$) being in phase to said AC power supply voltage.

2. The method of controlling a converter according to claim 1, wherein said first phase current command value ($I_d{}^*$) is set to zero.

3. The method of controlling a converter according to claim 1 or 2, wherein an upper limit value of said first constant (607) is limited by a maximum rating of said current (I) passing through said multiphase AC power supply.

4. The method of controlling a converter according to claim 2, wherein said second phase voltage command value ($V_q{}^*$) is corrected by subtracting (610) the product ($\omega L I_d$) of said first phase current ($I_d$) and an impedance ($\omega L$) of said reactor (2) from a command value ($V_s{}^*$) for the AC power supply voltage ($V_s$).

5. The method of controlling a converter according to claim 4, said second component being in phase to said AC power supply voltage ($V_s$), wherein
   said second phase voltage command value ($V_q{}^*$) is corrected by further subtracting a value ($\Delta V_q{}^*$), said value being obtained by multiplying said second phase current by a positive second constant ($R_{dump}$).

6. The method of controlling a converter according to claim 4, wherein said second phase voltage command value ($V_q{}^*$) is corrected by subtracting a value ($\Delta V_q{}^*$), said value being obtained by multiplying differentiated said end-to-end voltage ($V_{dc}$) by a third constant (T).

7. The method of controlling a converter according to claim 6, wherein said third constant (T) is set to the inverse of a resonance frequency ($\omega_n$) of an open loop transfer function of a control system regarding said second phase current ($I_q$) when said third constant is zero.

8. A device (6) of controlling a pulse width modulation converter (3) having a first end group (31) connected to a multiphase AC power supply (1) via a reactor (2) and a end group (32) connected to a smoothing capacitor (4), said device (6) comprising:

9

a coordinate converter (603) for obtaining a component of a current (I) passing through said multiphase AC power supply as a first phase current ($I_d$), said component being an orthogonal phase to an AC power supply voltage ($V_s$) output from said multiphase AC power supply (1);

a current controller (604) for obtaining a first phase voltage command value ($V_d$*) as a command value for a component of an AC input voltage ($V_i$) input to said pulse width modulation converter (3) based on said first phase current ($I_d$), said component being an orthogonal phase to said AC power supply voltage; and

a pulse width modulator (605) for controlling said pulse width modulation converter (3) based on an end-to-end voltage ($V_{dc}$) of said smoothing capacitor (4) and said first phase voltage command value ($V_d$*);

***characterized by***

a first multiplier (607) for multiplying said end-to-end voltage ($V_{dc}$) by a first constant (607), and outputting a second phase voltage command value ($V_q$*) as a command value for a component ($V_q$) of said AC input voltage ($V_i$), said component ($V_q$) being in phase to said AC power supply voltage and said pulse width modulator (605) controlling said pulse width modulation converter (3) without using a command value for the end-to-end voltage ($V_{dc}$).

**9.** The device (6) of controlling a converter according to claim 8, wherein said first phase current command value ($I_d$*) is set to zero.

**10.** The device (6) of controlling a converter according to claim 8 or 9, wherein said pulse width modulator (605) controls said pulse width modulation converter (3) based on said first phase voltage command value ($V_d$*) and said second phase voltage command value ($V_q$*); and

an upper limit value of said first constant (607) is limited by a maximum rating of said current (I) passing through said multiphase AC power supply.

**11.** The device (6) of controlling a converter according to claim 10, further comprising:

a second multiplier (608) for obtaining the product ($\omega L I_d$) of said first phase current ($I_d$) and impedance ($\omega L$) of said reactor (2); and

a first subtracter (610) for subtracting an output from said second multiplier (608) from an output ($V_s$*) from said first multiplier (607) to correct said output ($V_s$*) from said first multiplier (607).

**12.** The device (6) of controlling a converter according to claim 11, wherein said second phase current ($I_q$) is obtained at said coordinate converter (603); and

said device (6) further comprising

a third multiplier (612) for obtaining the product ($\Delta V_q$*) of said second phase current ($I_q$) and a positive second constant ($R_{dump}$) , wherein

said first subtracter (610) further subtracts said output from said third multiplier (612) from an output from said first multiplier (607), to correct said output from said first multiplier.

**13.** The device (6) of controlling a converter according to claim 11, further comprising

a differentiator (613) for obtaining a value ($\Delta V_q$*) by multiplying differentiated said end-to-end voltage ($V_{dc}$) by a third constant (T), wherein

said first subtracter (610) further subtracts an output ($T_s$) from said differentiator (613) from an output ($V_s$) from said first multiplier (607), to correct said output ($V_s$*) from said first multiplier (607).

**14.** The device (6) of controlling a converter according to claim 13, wherein said third constant (T) is set to the inverse of a resonance frequency ($\omega_n$) of an open loop transfer function of a control system regarding said second phase current ($I_q$) when said third constant is zero.

**Patentansprüche**

**1.** Verfahren zum Steuern eines Impulsbreiten-Modulationswandlers (3), der eine erste, über einen Reaktor (2) mit einer Multiphasen-Wechselstromversorgung (1) verbundene Endgruppe (31) und eine zweite, mit einem Glättungskondensator (4) verbundene Endgruppe (32) aufweist, wobei das Verfahren die Schritte umfasst:

Detektieren einer End-zu-End-Spannung ($V_{dc}$) des Glättungskondensators (4);
Erhalten (603) einer Komponente eines durch die Multiphasen-Wechselstromversorgung (1) hindurchgehenden Stroms ($I_d$) als einen ersten Phasenstrom ($I_d$), wobei die Komponente eine orthogonale Phase zu einer aus der Multiphasen-Wechselstromversorgung (1) ausgegebenen Wechselstromversorgungsspannung ($V_s$) ist;

Erhalten (604, 606) eines ersten Phasenspannungsbefehlswerts ($V_d$*) als einen Befehlswert für eine Komponente ($V_d$) einer Wechselstromeingangsspannung ($V_i$), basierend auf dem ersten Phasenstrom ($I_d$) und einem ersten Phasenstrombefehlswert ($I_d$*) als einen Befehlswert für den ersten Phasenstrom ($I_d$), wobei die Komponente eine orthogonale Phase zur Wechselstromversorgungsspannung ist,

Steuern des Impulsbreiten-Modulationswandlers (3), basierend auf dem ersten Phasenspannungsbefehlswert ($V_d$*) und einem zweiten Phasenspannungsbefehlswert ($V_q$*),

**gekennzeichnet durch**

Erhalten des zweiten Phasenspannungsbefehlswerts ($V_q$*) als einen Befehlswert für eine Komponente ($V_q$) der Wechselstromeingangsspannung ($V_i$), die am Impulsbreitenmodulationswandler (3) eingegeben wird, **durch** Multiplizieren der End-zu-End-Spannung ($V_{dc}$) mit einer ersten Konstante (607), ohne einen Befehlswert für die End-zu-End-Spannung ($V_{dc}$) zu verwenden, wobei die Komponente ($V_q$) in Phase zur Wechselstromversorgungsspannung ist.

2. Verfahren zum Steuern eines Wandlers gemäß Anspruch 1, wobei der erste Phasenstrombefehlswert ($I_d$*) auf Null eingestellt ist.

3. Verfahren zum Steuern eines Wandlers gemäß Anspruch 1 oder 2, wobei ein oberer Grenzwert der ersten Konstante (607) durch einen maximalen Nennwert des durch die Multiphasen-Wechselstromversorgung hindurchgehenden Stroms (I) begrenzt wird.

4. Verfahren zum Steuern eines Wandlers gemäß Anspruch 2, wobei der zweite Phasenspannungsbefehlswert ($V_q$*) durch Subtrahieren (610) des Produkts ($\omega L I_d$) des ersten Phasenstroms (ID) und einer Impedanz ($\omega L$) des Reaktors (2) von einem Befehlswert ($V_s$*) für die Wechselstromversorgungsspannung ($V_s$) korrigiert wird.

5. Verfahren zum Steuern eines Wandlers gemäß Anspruch 4, wobei die zweite Komponente in Phase mit der Wechselstromversorgungsspannung ($V_B$) ist, wobei
der zweite Phasenspannungsbefehlswert ($V_q$*) durch weiteres Subtrahieren eines Wertes ($\Delta V_q$*) korrigiert wird, wobei der Wert durch Multiplizieren des zweiten Phasenstroms mit einer positiven zweiten Konstante ($R_{dump}$) erhalten wird.

6. Verfahren zum Steuern eines Wandlers gemäß Anspruch 4, wobei der zweite Phasenspannungsbefehlswerts ($V_q$*) durch Subtrahieren eines Wertes ($\Delta V_q$*) korrigiert wird, wobei der Wert durch Multiplizieren abgeleiteter besagter End-zu-End-Spannung ($V_{dc}$) mit einer dritten Konstante (T) erhalten wird.

7. Verfahren zum Steuern eines Wandlers gemäß Anspruch 6, wobei die dritte Konstante (T) auf das Inverse einer Resonanzfrequenz ($\omega_n$) einer Offenschleifen-Transferfunktion eines Steuersystems bezüglich des zweiten Phasenstroms ($I_q$) eingestellt wird, wenn die dritte Konstante Null ist.

8. Vorrichtung (6) zum Steuern eines Impulsbreiten-Modulationswandlers (3), der eine erste, mit einer Multiphasen-Wechselstromversorgung (1) über einen Reaktor (2) verbundene Endgruppe (31) und eine zweite, mit einem Glättungskondensator (4) verbundene Endgruppe (32) aufweist, wobei die Vorrichtung umfasst:

einen Koordinatenwandler (603) zum Erhalten einer Komponente eines durch die Multiphasen-Wechselstromversorgung hindurchgehenden Stroms (I), als einem ersten Phasenstrom ($I_d$), wobei die Komponente eine orthogonale Phase zu einer Wechselstromversorgungsspannung ($V_s$) ist, die aus der Multiphasen-Wechselstromversorgung (1) ausgegeben ist; und

eine Stromsteuervorrichtung (604) zum Erhalten eines ersten Phasenspannungsbefehlswerts ($V_d$*) als einem Befehlswert für eine Komponente einer WechselstromEingangsspannung ($V_i$), die am Impulsbreiten-Modulationswandler (3) eingegeben ist, basierend auf dem ersten Phasenstrom ($I_d$), wobei die Komponente eine orthogonale Phase zur Wechselstromversorgungsspannung ist;

einen Impulsbreitenmodulator (605) zum Steuern des Impulsbreiten-Modulationswandlers (3), basierend auf einer End-zu-End-Spannung ($V_{dc}$) des Glättungskondensators (4) und dem ersten Phasenspannungsbefehlswert ($V_d$*);

**gekennzeichnet durch**

einen ersten Multiplizierer (607) zum Multiplizieren der End-zu-End-Spannung ($V_{dc}$) mit einer ersten Konstante (607) und Ausgeben eines zweiten Phasenspannungsbefehlswerts ($V_q$*) als einen Befehlswert für eine Komponente ($V_q$) der Wechselstromeingangsspannung ($V_i$), wobei die Komponente in Phase zur Wechselstromversorgungsspannung ist, und der Impulsbreitenmodulator (605) den Impulsbreiten-Modulationswandler (3) ohne Einsatz eines Befehlswerts für die End-zu-End-Spannung ($V_{dc}$) steuert.

9. Vorrichtung (6) zum Steuern eines Wandlers gemäß Anspruch 8, wobei der erste Phasenstrombefehlswerts ($I_d$*) auf Null eingestellt ist.

10. Vorrichtung (6) zum Steuern eines Wandlers gemäß Anspruch 8 oder 9, wobei der Impulsbreitenmodulator (605) den Impulsbreiten-Modulationswandler (3) steuert, basierend auf dem ersten Phasenspannungsbefehlswert ($V_d$*) und dem zweiten Phasenspannungsbefehlswert ($V_q$*), und
ein oberer Grenzwert der ersten Konstante (607) durch einen maximale Nennwert des durch die Multiphasen-Wechselstromversorgung hindurchgehenden Stroms (I) beschränkt ist.

11. Vorrichtung (6) zum Steuern eines Wandlers gemäß Anspruch 10, weiter umfassend:

einen zweiten Multiplizierer (608) zum Erhalten des Produktes ($\omega L I_d$) von erstem Phasenstrom ($I_d$) und Impedanz ($\omega L$) des Reaktors (2); und
einen ersten Subtrahierer (610) zum Subtrahieren einer Ausgabe aus dem zweiten Multiplizierer (608) von einer Ausgabe ($V_s$*) aus dem ersten Multiplizierer (607), um die Ausgabe ($V_s$*) aus dem ersten Multiplizierer (607) zu korrigieren.

12. Vorrichtung (6) zum Steuern eines Wandlers gemäß Anspruch 11, wobei der zweite Phasenstrom ($I_q$) an dem Koordinatenwandler (603) erhalten wird,
wobei die Vorrichtung (6) weiter umfasst:

einen dritten Multiplizierer (612) zu Erhalten des Produktes ($\Delta V_q$*) des zweiten Phasenstroms ($I_q$) und einer positiven zweiten Konstante ($R_{dump}$), wobei
der erste Subtrahierer (610) weiterhin die Ausgabe aus dem dritten Multiplizierer (612) von einer Ausgabe aus dem ersten Multiplizierer (607) subtrahiert, um die Ausgabe aus dem ersten Multiplizierer zu korrigieren.

13. Vorrichtung (6) zum Steuern eines Wandlers gemäß Anspruch 11, weiter umfassend:

einen Differentiator (613) zum Erhalten eines Wertes ($\Delta V_q$*) durch Multiplizieren einer differenzierten besagten End-zu-End-Spannung ($V_{dc}$) mit einer dritten Konstante (T), wobei
der erste Subtrahierer (610) weiter eine Ausgabe ($T_s$) aus dem Differentiator (613) von einer Ausgabe ($V_s$) aus dem ersten Multiplizierer (607) subtrahiert, um die Ausgabe ($V_s$*) aus dem ersten Multiplizierer (607) zu korrigieren.

14. Vorrichtung (6) zum Steuern eines Wandlers gemäß Anspruch 13, wobei die dritte Konstante (T) auf das Inverse einer Resonanzfrequenz ($\omega_n$) einer Offenschleifen-Transferfunktion eines Steuersystems bezüglich des zweiten Phasenstroms ($I_q$) eingestellt wird, wenn die dritte Konstante Null ist.

## Revendications

1. Procédé de commande d'un convertisseur (3) à modulation de largeur d'impulsions ayant un premier groupe d'extrémité (31) connecté à une alimentation électrique (1) en courant alternatif multiphasé par l'intermédiaire d'un réacteur (2) et un deuxième groupe d'extrémité (32) connecté à un condensateur de lissage (4), ledit procédé comprenant les étapes qui consistent à :

détecter une tension ($V_{dc}$) de bout en bout dudit condensateur de lissage (4) ;
obtenir (603) une composante ($I_d$) d'un courant passant à travers ladite alimentation électrique (1) en courant alternatif multiphasé comme premier courant ($I_d$) de phase, ladite composante étant une phase orthogonale à une tension ($V_s$) d'alimentation électrique en courant alternatif délivrée en sortie de ladite alimentation électrique (1) en courant alternatif multiphasé ;
obtenir une première valeur ($V_d$*) de commande de tension de phase comme valeur de commande pour une composante ($V_d$) d'une tension ($V_i$) d'entrée en courant alternatif sur la base dudit premier courant de phase ($I_d$) et une première valeur ($I_d$*) de commande de courant de phase comme valeur de commande pour ledit premier courant ($I_d$) de phase, ladite composante ($V_d$) étant une phase orthogonale à ladite tension d'alimentation électrique en courant alternatif ; et
commander ledit convertisseur (3) à modulation de largeur d'impulsions sur la base de ladite première valeur ($V_d^*$) de commande de tension de phase et d'une deuxième valeur ($V_q^*$) de commande de tension de phase ;
**caractérisé par**
le fait d'obtenir ladite deuxième valeur ($V_q^*$) de commande de tension de phase comme valeur de commande pour une composante ($V_q$) de ladite tension ($V_i$) d'entrée en courant alternatif introduite audit convertisseur (3) à modulation de largeur d'impulsions en multipliant ladite tension de bout en bout ($V_{dc}$) par une première constante (607) sans utiliser une valeur de commande pour la tension ($V_{dc}$) de bout en bout, ladite composante ($V_q$) étant en phase avec ladite tension ($V_s$) d'alimentation électrique en courant alternatif.

2. Procédé de commande d'un convertisseur selon la revendication 1, dans lequel ladite première valeur ($I_d^*$) de commande de courant de phase est réglée sur zéro.

3. Procédé de commande d'un convertisseur selon les revendications 1 ou 2, dans lequel une valeur limite supérieure de ladite première constante (607) est limitée par un calibre maximum dudit courant (I) passant par ladite alimentation électrique en courant alternatif multiphasé.

4. Procédé de commande d'un convertisseur selon la revendication 2, dans lequel ladite deuxième valeur ($V_q^*$) de commande de tension de phase est corrigée en soustrayant (610) le produit ($\omega L I_d$) dudit premier courant ($I_d$) de phase et d'une impédance ($\omega L$) dudit réacteur (2) d'une valeur ($V_s^*$) de commande pour la tension ($V_s$) d'alimentation électrique en courant alternatif.

5. Procédé de commande d'un convertisseur selon la revendication 4, ladite deuxième composante étant en phase avec ladite tension ($V_s$) d'alimentation électrique en courant alternatif, dans lequel ladite deuxième valeur ($V_q^*$) de commande de tension de phase est corrigée en soustrayant encore une valeur ($\Delta V_q^*$), ladite valeur étant obtenue en multipliant ledit deuxième courant de phase par une deuxième constante ($R_{dump}$) positive.

6. Procédé de commande d'un convertisseur selon la revendication 4, dans lequel ladite deuxième valeur ($V_q^*$) de commande de tension de phase est corrigée en soustrayant une valeur ($\Delta V_q^*$), ladite valeur étant obtenue en multipliant ladite tension ($V_{dc}$) de bout en bout différenciée par une troisième constante (T).

7. Procédé de commande d'un convertisseur selon la revendication 6, dans lequel ladite troisième constante (T) est réglée sur l'inverse d'une fréquence de résonnance ($\omega_n$) d'une fonction de transfert en boucle ouverte d'un système de commande par rapport audit deuxième courant ($I_q$) de phase lorsque ladite troisième constante est égale à zéro.

8. Dispositif (6) de commande d'un convertisseur (3) à modulation de largeur d'impulsions ayant un premier groupe d'extrémité (31) connecté à une alimentation électrique (1) en courant alternatif multiphasé par l'intermédiaire d'un réacteur (2) et un deuxième groupe d'extrémité (32) connecté à un condensateur de lissage (4), ledit dispositif comprenant :

un convertisseur de coordonnées (603) pour obtenir une composante ($I_d$) d'un courant (I) passant à travers ladite alimentation électrique en courant alternatif multiphasé comme premier courant ($I_d$) de phase, ladite composante étant une phase orthogonale à une tension ($V_s$) d'alimentation électrique en courant alternatif délivrée en sortie de ladite alimentation électrique en courant alternatif multiphasé ; et
une unité de commande de courant (604) pour obtenir une première valeur ($V_d^*$) de commande de tension de phase comme valeur de commande pour une composante ($V_d$) d'une tension ($V_i$) d'entrée en courant alternatif introduite audit convertisseur (3) à modulation de largeur d'impulsions sur la base dudit premier courant ($I_d$) de phase, ladite composante étant une phase orthogonale à ladite tension d'alimentation électrique en courant alternatif ;
un modulateur de largeur d'impulsions (605) pour commander ledit convertisseur (3) à modulation de largeur d'impulsions sur la base d'une tension ($V_{dc}$) de bout en bout dudit condensateur de lissage (4) et de ladite première valeur ($V_d^*$) de commande de tension de phase ;
**caractérisé par**
un premier multiplicateur (607) pour multiplier ladite tension ($V_{dc}$) de bout en bout par une première constante (607), et délivrer en sortie une deuxième valeur ($V_q^*$) de commande de tension de phase comme valeur de commande pour une composante ($V_q$) de ladite tension ($V_i$) d'entrée en courant alternatif, ladite composante étant en phase avec ladite tension d'alimentation électrique en courant alternatif et ledit modulateur de largeur d'impulsions (605) pour commander ledit convertisseur (3) à modulation de largeur d'impulsions sans utiliser une valeur de commande pour la tension ($V_{dc}$) de bout en bout.

9. Dispositif (6) de commande d'un convertisseur selon la revendication 8, dans lequel ladite première valeur ($I_d*$) de commande de courant de phase est réglée sur zéro.

10. Dispositif (6) de commande d'un convertisseur selon les revendications 8 ou 9, dans lequel
ledit modulateur (605) de largeur d'impulsions commande ledit convertisseur (3) à modulation de largeur d'impulsions sur la base de ladite première valeur ($V_d*$) de commande de tension de phase et de ladite deuxième valeur ($V_q*$) de commande de tension de phase, et
une valeur limite supérieure de ladite première constante (607) est limitée par un calibre maximum dudit courant (I) passant à travers ladite alimentation électrique en courant alternatif.

11. Dispositif (6) de commande d'un convertisseur selon la revendication 10, comprenant en outre :

un deuxième multiplicateur (608) pour obtenir le produit ($\omega L I_d$) dudit premier courant ($I_d$) de phase et d'une impédance ($\omega L$) dudit réacteur (2) ; et
un premier soustracteur (610) pour soustraire une sortie dudit deuxième multiplicateur (608) d'une sortie ($V_s*$) dudit premier multiplicateur (607) pour corriger ladite sortie ($V_s*$) provenant dudit premier multiplicateur (607).

12. Dispositif (6) de commande d'un convertisseur selon la revendication 11, dans lequel ledit deuxième courant ($I_q$) de phase est obtenu audit convertisseur de coordonnées (603), et
ledit dispositif (6) comprenant en outre
un troisième multiplicateur (612) pour obtenir le produit ($\Delta V_q*$) dudit deuxième courant ($I_q$) de phase et d'une deuxième constante ($R_{dump}$) positive, où
ledit premier soustracteur (610) soustrait en outre ladite sortie dudit troisième multiplicateur (612) d'une sortie dudit premier multiplicateur (607), pour corriger ladite sortie provenant dudit premier multiplicateur.

13. Dispositif (6) de commande d'un convertisseur selon la revendication 11, comprenant en outre
un différentiateur (613) pour obtenir une valeur ($\Delta V_q*$) en multipliant ladite tension ($V_{dc}$) de bout en bout différentiée par une troisième constante (T), où
ledit premier soustracteur (610) soustrait en outre une sortie ($T_g$) dudit différentiateur (613) d'une sortie ($V_s$) provenant dudit premier multiplicateur (607), pour corriger ladite sortie ($V_s*$) provenant du premier multiplicateur (607).

14. Dispositif (6) de commande d'un convertisseur selon la revendication 13, dans lequel ladite troisième constante (T) est réglée sur l'inverse d'une fréquence de résonnance ($\omega_n$) d'une fonction de transfert en boucle ouverte d'un système de commande concernant ledit deuxième courant (Iq) de phase lorsque ladite troisième constante est égale à zéro.

F I G . 1

F I G . 2

F I G . 3

F I G . 4

F I G . 5

F I G . 6

FIG. 7

F I G . 8

$$I_{dc} \ominus \xrightarrow{\phantom{xx}} \boxed{\dfrac{1}{1/R_{dc}+Cs}} \xrightarrow{V_{dc}} \boxed{k_{inv}/\sqrt{2}} \xrightarrow{V_s^*} \ominus \xrightarrow{V_q^*} \boxed{-\dfrac{1}{r+Ls}} \xrightarrow{I_a}$$

45

607

101

$\boxed{R_{dump}}$

612

F I G . 9

$$V_s^* \longrightarrow \boxed{-\dfrac{1}{(r+R_{dump})+Ls}} \longrightarrow I_a$$

201

F I G . 1 0

FIG. 11

F I G . 1 2

EP 1 811 644 B1

FIG.13

PWM CONV. 3

PULSE WIDTH MODULATION

$V_i = \sqrt{V_d^2 + V_q^2}$

$K_s = \sqrt{2}V_i / V_{dc}$

$\phi = \tan^{-1}(V_d/V_q)$

605

$\omega t$  602

2/3  603

ACR  604

$T_s$  613

$\omega L$  608

$-\omega L$  609

$k_{inv}/\sqrt{2}$  607

$V_{dc}$

$V_s^*$

$V_q^*$  610

$V_d^*$  611

$\Delta V_q^*$

$I_q$

$I_d$

$I_d^* = 0$  606

601

$V_i$

$V_s$

$I$

2

1

5

4

F I G . 1 4

F I G . 1 5

Bode Diagram

F I G . 1 6

Bode Diagram

F I G . 1 7

EP 1 811 644 B1

**EP 1 811 644 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 08228490 B
- JP 07200084 B
- JP 1298959 A
- JP 11235068 A